# DEMANDE DE BREVET EUROPEEN

(11) **EP 1 671 844 A1**
(43) Date de publication de la demande: **21.06.2006**
(21) Numéro de dépôt: 05292644.1
(22) Date de dépôt: 13.12.2005
(51) Int. Cl.: B60R 9/00

(54) **Fixation amovible**

(30) Priorité: 14.12.2004 FR 0413288
(71) Demandeur: Fortin, Jean-Louis, 06600 Antibes (FR)
(72) Inventeur: Fortin, Jean-Louis, 06600 Antibes (FR)
(74) Mandataire: Pontet, Bernard

(57) **Abrégé**

"Fixation amovible" (1) destinée à une carrosserie présentant un interstice de jonction entre deux de ses éléments, comportant une première partie désignée ci-après "Pièce d'attache" (2) fixée à demeure sur un des dits éléments de carrosserie, et une seconde partie, désignée ci-après "Attache" (3) se verrouillant de façon libérable à ladite "Pièce d'attache" (2).
- Ladite "Pièce d'attache" (2) est une plaque destinée à être pliée pour venir épouser les contours de la carrosserie, qui dispose de crochets d'attache à son extrémité fonctionnelle.
- Ladite Attache" (3) possède entre autres, des crochets manoeuvrables destinés à coopérer avec les crochets d'attache de ladite "Pièce d'attache" (2) et une jupe (7) qui épouse les formes de la carrosserie.

La présente invention a pour but principal, la fixation quasi universelle d'un accessoire extérieur, sur la carrosserie de tout type de véhicule. (La figure ci-jointe montre pour l'exemple la fixation d'un parasol pour voiture)

## Description

L'invention concerne le domaine des dispositifs de liaison et plus spécialement les systèmes d'accrochage d'éléments extérieurs sur une carrosserie.

L'invention a pour objet une "Fixation" composée de deux parties principales, dont l'une fixée sur une carrosserie, notamment de véhicule, sert de racine à la seconde amovible qui a pour fonction l'arrimage d'un accessoire à cette dite carrosserie.

### Etat de la technique

Actuellement, les "Fixations" pour accessoires extérieurs à la carrosserie, sont rarement prévues lors de la conception des véhicules, exceptions faites des barres portes charge de toiture et des attelages pour remorques et caravanes.

Certains accessoires nécessitent de percer la carrosserie (Antennes, phares additionnels, béquets...) Sans oublier les plus courants que sont les plaques d'immatriculation.

Quelques uns se collent sur la peinture ou sur les vitres du véhicule.

Mais la plupart des autres accessoires extérieurs utilise tant bien que mal, les moindres possibilités d'accrochage que leur laissent involontairement les Concepteurs de véhicules ; Les plus utilisés étant l'association d'appuis (Ventouses, supports magnétiques...) et de sangles enserrant le coffre, en ce qui concerne les portes vélos, par exemple ; Ou encore l'association de clips pinçant les bords des capots et de sangles coincées dans les portières ou les vitres, en ce qui concerne les parasols pour voitures, pour autre exemple. (Brevet N° FR 0114236)

Tout ces systèmes se heurtent à la difficulté de ne pouvoir être universels, tant les véhicules diffèrent en formes, en qualité et en matériaux utilisés dans leur conception ; Cela rend incontournable la réalisation d'une multitude d'adaptations aux différents types de véhicules ; Il en découle forcément, un surcoût de revient et donc un frein à la commercialisation de tels accessoires.

### Résumé de l'invention

La présente invention a pour but principal, la fixation quasi universelle d'un accessoire extérieur, sur la carrosserie de tout type de véhicule.

Cette invention exploite pour cela, l'une des seules constantes de formes utilisées de longue date, en conception de carrosseries ; Elle se fixe à l'intérieur de la carrosserie, sous un élément mobile (Portes, Capots...) sous un éléments démontable (Feux, béquets...) ou contre un élément fixe (Aile, Pare choc...) et ressort par l'interstice inévitable car nécessaire, qu'il y a entre ces éléments mobiles et fixes.

Elle se compose d'une première partie, désignée ci-après "Pièce d'attache" qui se fixe et demeure de façon appropriée sur le véhicule, et d'une seconde partie, désignée ci-après "Attache" conçue pour se rattacher à la dite "Pièce d'attache" de façon aisée, rapide et sure, et qui possède par ailleurs, des moyens de liaison à un quelconque accessoire.

Pour préserver l'esthétique du véhicule et ne pas enfreindre les règles de sécurité, la "Pièce d'attache" ne dépasse pas de la carrosserie ; Elle est immobilisée sensiblement dans le plan extérieur de cette dernière ; L'Attache vient rechercher sa prise sur cette dite "Pièce d'attache", à l'intérieur de l'interstice de jonction des éléments de carrosserie ; Cette Fixation possède donc des moyens de verrouillage de la "Pièce d'attache" et de l'Attache qui s'adaptent et s'insèrent intégralement dans l'interstice de jonction des dits éléments de carrosserie non prévus initialement pour les recevoir.

Positionnée de la sorte à proximité de plis rigidifiant la tôle, ajustée dans l'interstice de jonction de la carrosserie, la présente invention offre ainsi, de grandes qualités et de multiples et diverses possibilités d'utilisations.

Dans le but de répondre au mieux à un souci de standardisation, la "Pièce d'attache" est une plaque d'épaisseur réduite, destinée à être pliée pour venir épouser les contours de la carrosserie ; Elle est conçue pour se prêter à un formage sur mesures ; Des découpes de matière sont prévues pour réduire l'effort nécessaire à ce formage, de sorte qu'un simple outil manuel adapté, suffit pour obtenir facilement celui-ci.

Disposant à son extrémité fonctionnelle, de moyens de verrouillage ayant la forme d'un ou de plusieurs crochets d'attache, et bien qu'elle puisse être collée, cette dite "Pièce d'attache" a aussi des trous permettant son immobilisation par vissage ou rivetage sur la carrosserie.

L'Attache, quant à elle, possède des moyens de verrouillage ayant la forme d'un ou de plusieurs crochets manoeuvrables destinés à coopérer avec le ou les crochets d'attache de l'extrémité fonctionnelle de ladite "Pièce d'attache"

Pour préserver l'état de surface de la carrosserie sur laquelle elle prend nécessairement appuis, cette Attache est aussi équipée d'une jupe en caoutchouc qui couronne son embase lisse et sans aspérité ; Cette jupe destinée à épouser avantageusement les formes de la carrosserie, contribue ainsi à une meilleure stabilité de l'invention.

L'embase de l'Attache est aussi équipée de protubérances permettant son centrage, d'une part longitudinalement sur la "Pièce d'attache" et d'autre part transversalement entre les éléments de carrosserie ; Afin de rendre ce centrage transversal adaptable à la largeur de l'interstice de jonction de ces éléments de carrosserie, des flancs amovibles de différentes épaisseurs s'emboîtent dans son embase de part et d'autre des crochets manoeuvrables et des protubérances.

En fonction de l'accessoire à y amarrer, l'Attache recevra une pièce de fixation adaptées aux besoins spécifiques et pouvant présenter des configurations fonctionnelles diverses ; Par exemples, pour y relier un tendeur ou une cordelette, cette pièce aura la forme d'un anneau ou d'un crochet, pour une sangle, celle d'un passant rectangulaire, pour un embout de tringle flexible, celle d'une rotule, pour un ensemble rigide, celle d'un embout fileté... Etc.

Selon un mode de réalisation préférentiel, l'Attache est aussi munie de deux boutons, dépassant de ses flancs et emboîtés en opposition chacun sur un crochet manoeuvrables, qui permettent à l'utilisateur de mouvoir ces dits crochets manoeuvrables en contrariant l'effet d'un ressort de maintien ; Cette fonction pourra être condamnée selon le besoin, par un verrou coulissant interne, qui vient s'intercaler à volonté entre les deux crochets manoeuvrables et interdit leur déplacement et donc leur décrochage de la "Pièce d'attache" ; Les deux extrémités de ce verrou coulissant, traversant tour à tour la paroi extérieure de ladite Attache, forment deux témoins visuels qui indiquent sa position à l'utilisateur ; Pour sécuriser d'avantage ladite "Fixation" sur le véhicule, ce verrou coulissant est percé d'un trou, venant correspondre avec un autre trou d'une paroi intérieure de ladite Attache, prévu pour recevoir l'anse d'un cadenas afin d'immobiliser ce dit verrou et interdire par conséquent le décrochage intempestif de l'Attache.

Selon un autre mode de réalisation préférentiel, l'Attache est aussi munie d'une serrure dont l'extrémité du barillet en forme de came, actionne les crochets manoeuvrables venus s'encastrer dans la "Pièce d'attache" sous l'effet de ressorts de maintien ; Un simple quart de tour de clef, contrariant l'effet des ressorts, permet alors de décrocher la dite Attache de la carrosserie.

Ainsi, une fixation amovible destinée à une carrosserie présentant un interstice de jonction entre deux de ses éléments, comportant une première partie désignée ci-après "Pièce d'attache" fixée à demeure sur un des dits éléments de carrosserie, et une seconde partie, désignée ci-après "Attache" (3) se verrouillant de façon libérable à ladite "Pièce d'attache" caractérisée en ce que les moyens de verrouillage de la "Pièce d'attache" et ceux de l'Attache s'adaptent et s'insèrent intégralement dans l'interstice de jonction des dits éléments de carrosserie non prévus initialement pour les recevoir.

Une pièce d'attache pour une telle fixation amovible est avantageusement une plaque destinée à être pliée pour venir épouser les contours de la carrosserie, qui dispose à son extrémité fonctionnelle, des moyens de verrouillage ayant la forme d'un ou de plusieurs crochets d'attache.

Cette pièce d'attache peut comprendre à son extrémité fonctionnelle s'intercalant dans l'interstice de jonction de deux éléments de la carrosserie, est immobilisée sensiblement dans le plan extérieur de cette dite carrosserie.

L'attache peut posséder des moyens de verrouillage ayant la forme d'un ou de plusieurs crochets manoeuvrables destinés à coopérer avec le ou les crochets d'attache de ladite pièce d'attache. Elle peut aussi posséder une ou plusieurs protubérances qui la positionnent longitudinalement en renforçant sa fixation sur la "Pièce d'attache" et la positionnent transversalement dans l'interstice de jonction des deux éléments de la carrosserie. Avantageusement, elle possède aussi des flancs amovibles de différentes épaisseurs qui s'emboîtent dans son embase de part et d'autre des crochets manoeuvrables et des protubérances et perfectionnent le positionnement transversal de ladite Attache dans l'interstice de jonction des deux éléments de la carrosserie.

Une jupe en caoutchouc qui couronne son embase lisse et sans aspérité, destinée à épouser avantageusement les formes de la carrosserie en préservant l'état de surface de cette dernière, peut avantageusement équiper l'attache.

Cette attache possède de préférence, deux boutons dépassant de ses flancs et emboîtés en opposition chacun sur un crochet manoeuvrable, qui permettent à l'utilisateur de mouvoir l'un ou les deux crochets en contrariant l'effet d'un ressort de maintien.

Elle peut posséder en outre un verrou coulissant interne prévu pour accepter un cadenas éventuel, qui vient s'intercaler à volonté entre deux crochets manoeuvrables et interdit leur déplacement et donc leur décrochage de la pièce d'attache. Les deux extrémités de son verrou coulissant, traversant tour à tour la paroi extérieure de ladite Attache, peuvent former deux témoins visuels qui indiquent la position du dit verrou coulissant à l'utilisateur.

Une serrure dont l'extrémité du barillet en forme de came agit par rotation de la clef sur les crochets manoeuvrables en contrariant l'effet de leur ressort de maintien, permettant ainsi leur décrochage de la pièce d'attache, peut encore être prévue.

### Présentation des figures annexées

- La figure 1 montre l'utilisation de l'invention en plusieurs positions sur une voiture équipée d'un parasol ;
- La figure 2 est une représentation extérieure de l'Attache avec serrure, montée à l'extrémité d'un arceau de parasol munie d'un embout à rotule ;
- Les figures 3 et 4 sont des représentations extérieures de l'Attache avec boutons et cadenas, montée à l'extrémité d'un arceau de parasol munie d'un embout à rotule ;
- La figure 5 représente l'Invention avec boutons et cadenas, vue en coupe transversale par rapport à l'interstice de jonction de deux éléments de carrosserie ;
- La figure 6 représente l'Invention avec boutons et cadenas, vue en coupe longitudinale par rapport à l'interstice de jonction de deux éléments de carrosserie ;
- La figure 7 représente l'Invention avec serrure, vue en coupe transversale par rapport à l'interstice de jonction de deux éléments de carrosserie ;
- La figure 8 représente l'Invention avec serrure, vue en coupe longitudinale par rapport à l'interstice de jonction de deux éléments de carrosserie ;
- Les figures 9 et 10 sont des représentations de la "Pièce d'attache" formée et vissée soit sur un élément de carrosserie fixe, soit sur un élément de carrosserie mobile ;
- La figure 11 représente un outil manuel permettant le formage de la "Pièce d'attache" et en démontre le principe de fonctionnement.

### Description de deux modes de réalisation préférés

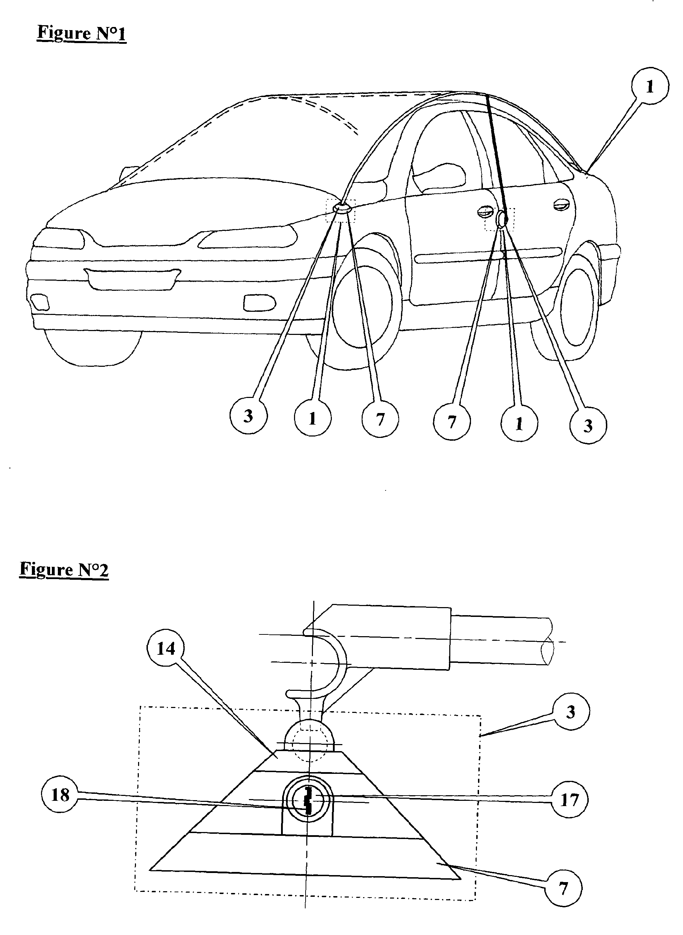

- La figure 1 montre les proportions de l'Attache (3) qui est la partie visible de l'invention (1) ;
   La forme tronc conique de celle-ci à laquelle s'ajoute la souplesse de sa jupe (7) lui donnent l'apparence esthétique d'une ventouse et lui confèrent une excellente aérodynamique lors d'utilisations sur véhicules en mouvement.

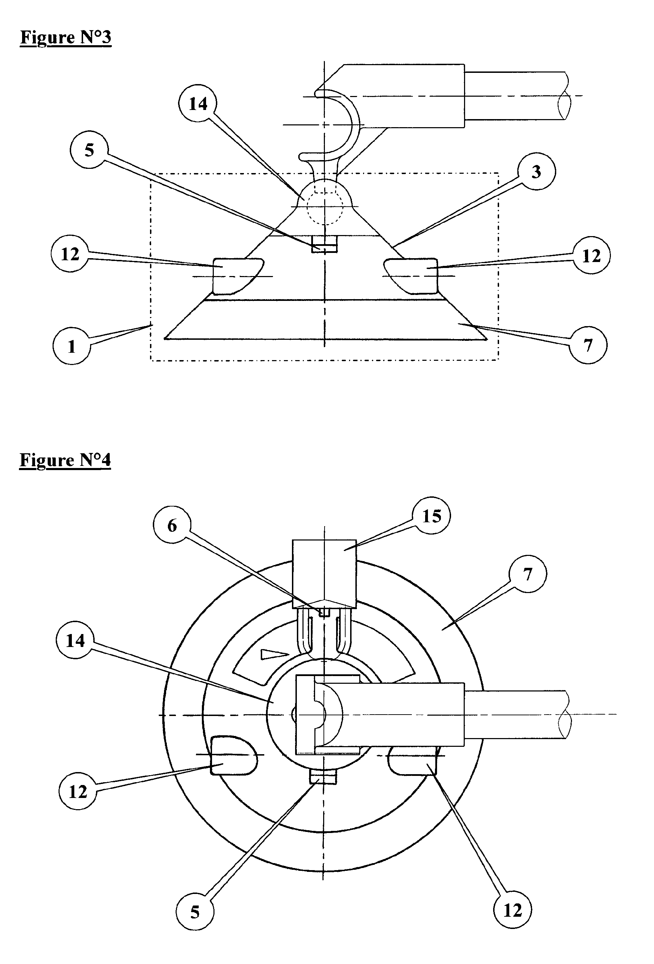

- La figure 2 détaille extérieurement l'Attache (3) équipée d'une serrure (17) actionnée par une clef (18) ; On y remarque la forme tronc conique de sa jupe au repos sans déformations, dont l'encombrement dépasse volontairement celui des éléments protubérants situés sous l'embase de ladite Attache (3) afin de les protéger et de donner une assise à cet ensemble lors de sa pose.

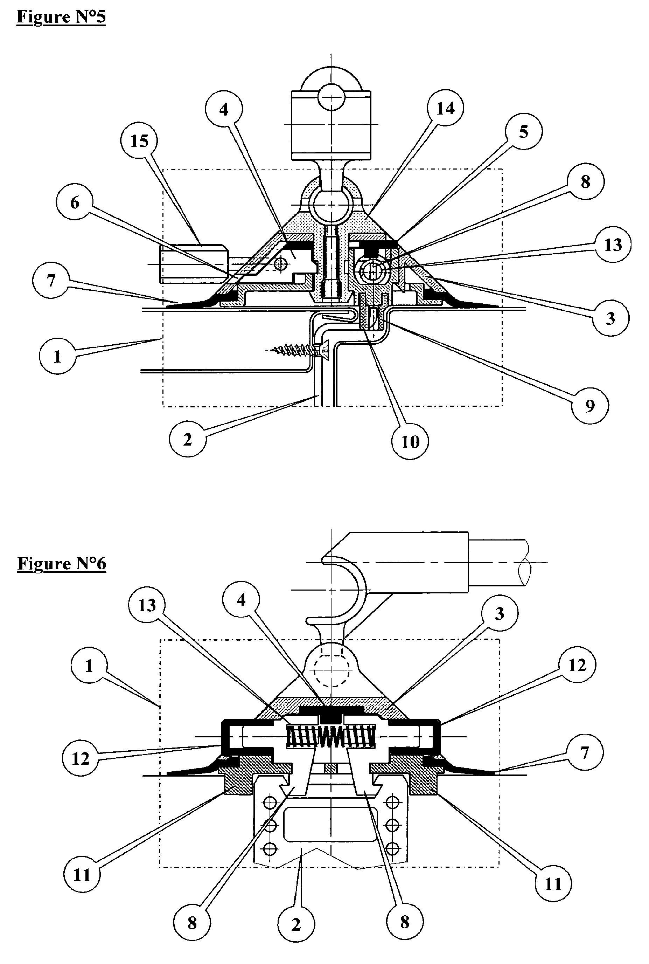

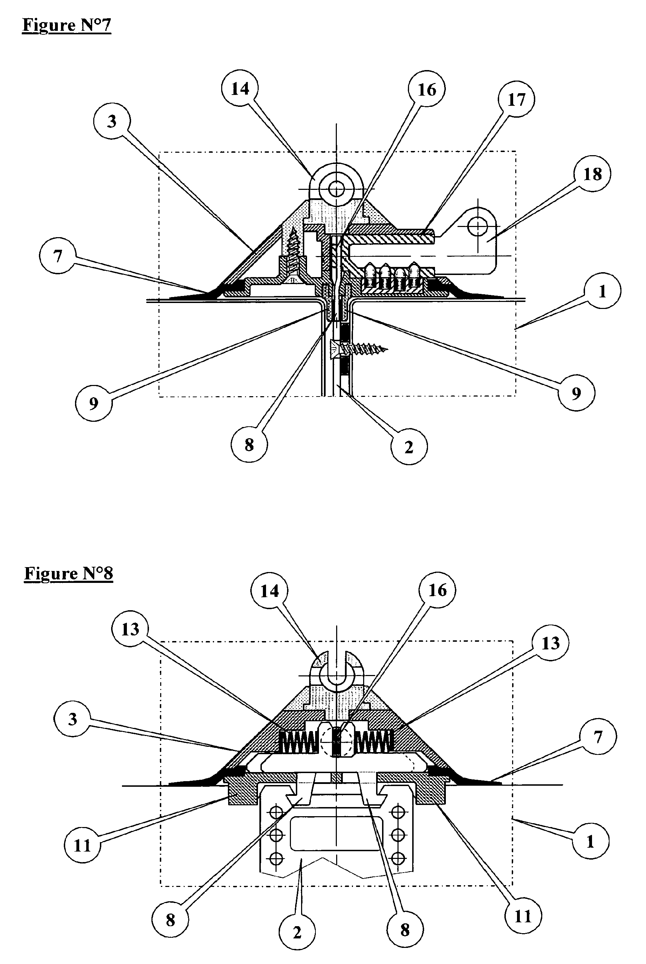

- Les figures 3 et 4 détaillent extérieurement l'Attache (3) équipée de deux boutons (12) verrouillée par l'adjonction d'un cadenas (15) ; On y remarque notamment les témoins visuels (5 et 6) indiquant à l'utilisateur la position du verrou coulissant interne (4).

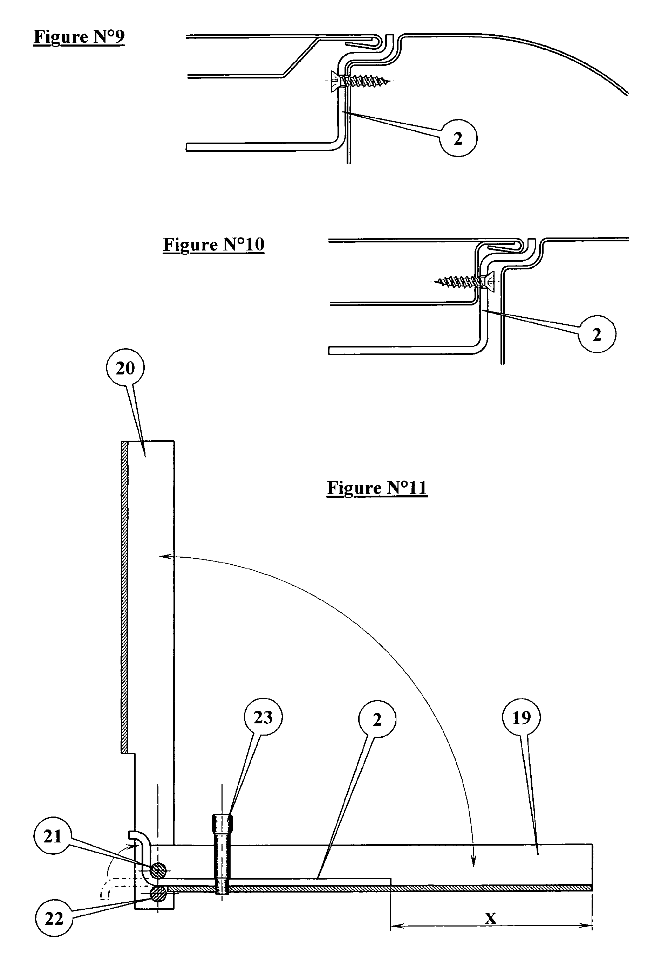

- Les figures 5 et 6 montrent l'invention en cours d'utilisation, installée sur une carrosserie;

On remarque tout d'abord le décalage volontaire de l'axe du système d'accrochage à boutons par rapport à l'axe le l'Attache (3) ; Ce détail permet pour l'exemple, de rendre traversante la pièce de fixation d'un accessoire (14) et d'offrir d'avantage de choix d'ancrage pour celle-ci.

La "Pièce d'attache" (2) formée à la demande, est vissée dans ce cas, sous un élément mobile de la carrosserie ; Son extrémité fonctionnelle crochetable est sensiblement centrée dans l'interstice de jonction des deux éléments de la carrosserie et alignée avec la surface extérieure de cette dernière ; Son autre extrémité inférieure, inutilisée, peut être recoupée ou repliée pour ne pas gêner la fermeture de l'élément mobile.

Des crochets manoeuvrables (8) faisant partie de l'Attache (3), maintenus écartés par un ressort (13), sont encastrés dans l'extrémité fonctionnelle crochetable de la "Pièce d'attache" (2).

Des protubérances (11) situées sous l'embase de l'Attache (3), la positionnent longitudinalement en renforçant sa fixation sur la "Pièce d'attache" (2) et la positionnent transversalement dans l'interstice de jonction des deux éléments de la carrosserie.

Des flancs de différentes épaisseurs (9 et 10) emboîtés dans l'embase de l'Attache (3) de part et d'autre des crochets (8) et des protubérances (11) perfectionnent le positionnement transversal de ladite Attache (3) dans l'interstice de jonction des deux éléments de la carrosserie.

Une jupe souple (7) entourant l'embase de l'Attache (3) épouse la forme de la carrosserie.

Deux boutons (12) dépassant de l'Attache (3) dont ils font partie et emboîtés en opposition chacun sur un crochet manoeuvrable (8), permettent à l'utilisateur de mouvoir l'un ou les deux crochets manoeuvrables (8) en contrariant l'effet d'un ressort de maintien (13).

Un verrou coulissant (4) interne à l'Attache (3) vient s'intercaler à volonté entre les deux crochets manoeuvrables (8) interdisant leur déplacement et donc leur décrochage de la "Pièce d'attache" (2) ; Les deux extrémités de ce verrou coulissant (4), traversant tour à tour la paroi extérieur de l'Attache (3), formant ainsi deux témoins visuels (5 et 6), indiquent à l'utilisateur la position de ce verrou (4) ; Ce dit verrou coulissant (4) percé d'un trou venant correspondre avec un autre trou d'une paroi intérieure de l'Attache (3), reçoit l'anse d'un cadenas (15) qui immobilise ce verrou coulissant (4) interdisant par conséquent le décrochage de l'Attache (3) de la "Pièce d'attache" (2) ;

Dans cet exemple, l'anse du cadenas (15) est utilisée de préférence pour déplacer le verrou coulissant (4) et l'on peut également repousser ce verrou par pression sur ses extrémités servant de témoins visuels (5 et 6) ; Les fonctions de ce verrou coulissant (4) peuvent s'étendrent au verrouillage simultané de la pièce de fixation (14) et un ressort peut aussi lui être adjoint pour le rappeler automatiquement en position déverrouillée lors du retrait du cadenas (15).
- Les figures 7 et 8 montrent l'invention en cours d'utilisation, installée sur une carrosserie;

On remarque cette fois que l'axe du système d'accrochage à serrure est confondu avec l'axe le l'Attache (3) ; Ce qui offre entre autres, l'avantage d'une meilleure stabilité de la Fixation sur la carrosserie.

Dans cet exemple, la "Pièce d'attache" (2) est utilisée sans être déformée préalablement ; Son extrémité fonctionnelle crochetable est sensiblement centrée dans l'interstice de jonction des deux éléments de carrosserie et alignée avec la surface extérieure de ceux-ci.

Des crochets manoeuvrables (8) faisant partie de l'Attache (3), maintenus écartés par des ressorts (13), sont encastrés dans l'extrémité fonctionnelle crochetable de la "Pièce d'attache" (2).

Des protubérances (11) situées sous l'embase de l'Attache (3), la positionnent longitudinalement en renforçant sa fixation sur la "Pièce d'attache" (2) et la positionnent transversalement dans l'interstice de jonction des deux éléments de la carrosserie.

Des flancs de différentes épaisseurs (9 et 10) emboîtés dans l'embase de l'Attache (3) de part et d'autre des crochets (8) et des protubérances (11) perfectionnent le positionnement transversal de ladite Attache (3) dans l'interstice de jonction des deux éléments de la carrosserie.

Une jupe souple (7) entourant l'embase de l'Attache (3) épouse la forme de la carrosserie.

Une serrure dont l'extrémité du barillet (17) en forme de came (16) agit par rotation de la clef (18) sur les crochets manoeuvrables (8) en contrariant l'effet de leur ressort de maintien (13), permet leur décrochage de la "Pièce d'attache" (2).
- Les figures 9, et 10 montrent la "Pièce d'attache" (2) formée pour épouser la forme de la carrosserie et venir s'intercaler dans l'interstice de jonction entre un élément fixe et un élément mobile de celle-ci ; Quelque soit l'élément choisi pour sa fixation, il importe d'une part, que cette "Pièce d'attache" (2) soit sensiblement positionnée dans le plan extérieur de la carrosserie, et d'autre part, que les jeux transversaux soient judicieusement répartis de chaque coté de l'extrémité fonctionnelle apparente de cette dite "Pièce d'attache" (2) ; Il est donc nécessaire de relever avec précision un minimum de 2 ou 3 cotes sur la carrosserie et de les reporter ensuite dans un mode de calcul basique pour utiliser l'outil de formage manuel.

La figure 11 représente cet outil de formage manuel, dont l'un (19) des deux bras articulés autour d'un axe (21) peut être posé horizontalement sur un coin de table ; Le deuxième bras articulé (20) est maintenu vertical par un deuxième axe (22) en butée de rotation sur le premier bras (19) ; Une "Pièce d'attache" (2) insérée entre ces deux axes (21 et 22) est positionnée selon une cote "X" découlant du calcul basique à partir des cotes relevées sur la carrosserie ; Un pion d'indexage (23) encastré dans un trous de la "Pièce d'attache" (2) et dans un des trous correspondant du bras horizontal (19) immobilise entre elles ces deux pièces ; Il suffit ensuite de manoeuvrer le levier vertical (20) pour déformer la "Pièce d'attache" (2) poussée en rotation autour de l'axe (21) par l'axe (22) solidaire du bras articulé (20) ; En retournant et en positionnant différemment la "Pièce d'attache" (2) dans cet outil, on obtient par la même opération, un autre pliage de cette pièce.

## Revendications

1. Fixation (1) comprenant une pièce d'attache (2) et une attache (3), ladite pièce d'attache étant prévue pour être fixée dans un interstice d'une carrosserie, ladite fixation comprenant des moyens pour un verrouillage amovible (8) de l'attache (3) sur la pièce d'attache (2) **caractérisé en ce que** lesdits moyens de verrouillage sont prévus pour s'insérer dans l'interstice.

2. Fixation selon la revendication 1 **caractérisé en ce que** la pièce d'attache est une plaque.

3. Fixation selon la revendication 2, **caractérisée en ce que** la plaque est prévue pour pouvoir être pliée.

4. Fixation selon la revendication 2 ou 3, **caractérisé en ce que** la plaque comprend des trous, notamment pour être vissée ou rivetée.

5. Fixation selon l'une des revendications 1 à 4, **caractérisée en ce que** les moyens de verrouillage comprennent un ou plusieurs crochets (8) prévus pour venir en prise sur une extrémité fonctionnelle de la pièce d'attache.

6. Fixation selon la revendication 5, **caractérisée en ce que** l'attache comprend au moins deux crochets, lesdits crochets étant maintenus en position verrouillée par un ressort de maintien (13).

7. Fixation selon la revendication 6, **caractérisé en ce que** l'attache comprend deux boutons (12) montés fonctionnellement sur les crochets (8) pour permettre le déverrouillage desdits crochets à l'encontre du ressort de maintien (13).

8. Fixation selon l'une des revendications 5 à 7, **caractérisée en ce que** l'attache comprend un verrou coulissant (4), ledit verrou étant prévu pour s'intercaler entre deux crochets (8) en position verrouillée.

9. Fixation selon la revendication 8, **caractérisée en ce que** deux extrémités opposées (5,6) du verrou forment des témoins pour le verrouillage et respectivement le déverrouillage des crochets.

10. Fixation selon la revendication 8 ou 9, **caractérisée en ce que** le verrou comprend un trou pour le passage d'une anse d'un cadenas (15).

11. Fixation selon la revendication 10, **caractérisée en ce que** l'attache comprend un ressort pour rappeler ledit verrou dans une position déverrouillée, lorsque le cadenas est retiré.

12. Fixation selon l'une des revendication 5 à 11, **caractérisée en ce qu'**elle comprend une serrure pour manoeuvrer l'au moins un crochet entre une position verrouillée et une position déverrouillée pour le crochet.

13. Fixation selon la revendication 12, **caractérisée en ce que** la serrure un barillet (17) don une extrémité en forme de came (16) agit par rotation d'une clef (18) sur les crochets (8) en contrariant l'effet d'un ressort de maintien (13), pour permettre leur décrochage d'avec la pièce d'attache (2).

14. Fixation selon l'une des revendications 1 à 13, **caractérisée en ce que** l'attache comprend une jupe (7) de protection en caoutchouc et une embase lisse, pour venir en contact sur la carrosserie.

15. Fixation selon l'une des revendications 1 à 14, **caractérisée en ce que** l'attache a une forme sensiblement tronconique.

16. Fixation selon l'une des revendications 1 à 15, **caractérisée en ce que** l'attache comprend des protubérances (11) pour son centrage longitudinal sur la pièce d'attache et/ou transversal dans l'interstice de la carrosserie.

17. Fixation selon la revendication 16, **caractérisée en ce qu'**elle comprend des flancs amovibles (9,10) pour être disposés de part et d'autres desdites protubérances.

18. Fixation selon l'une des revendications 1 à 17, **caractérisée en ce qu'**elle comprend dans l'attache, une pièce de fixation (14) pour un accessoire à attacher, ladite pièce de fixation étant changeable.

19. Pièce d'attache pour une fixation selon l'une des revendications 1 à 18.

20. Attache pour une fixation selon l'une des revendications 1 à 18.
